# EUROPEAN PATENT APPLICATION

(11) **EP 4 521 830 A1**
(43) Date of publication of application: **12.03.2025**
(21) Application number: 22940657.4
(22) Date of filing: 06.05.2022
(51) Int. Cl.: H04W 64/00

(54) **RANGING/SIDELINK POSITIONING METHOD AND APPARATUS**

(71) Applicant: Beijing Xiaomi Mobile Software Co., Ltd., Beijing 100085 (CN)
(72) Inventor: SHEN, Yang, Beijing 100085 (CN)
(74) Representative: König, Andreas Rudolf
(86) International application number: PCT/CN2022/091321
(87) International publication number: WO 2023/212963

(57) **Abstract**

The present invention relates to the technical field of communications, and provides a ranging/sidelink positioning method and apparatus, a device, and a storage medium. The method comprises: receiving a first ranging/sidelink positioning service request sent by a location management function entity (LMF), wherein the first ranging/sidelink positioning service request carries indication information (101); in response to the first ranging/sidelink positioning service request, initiating ranging/sidelink positioning between a first terminal device and a second terminal device (102); and sending measurement data and/or a measurement result of the ranging/sidelink positioning to the LMF according to the indication information (103). The present invention provides a processing method for the case of "ranging/sidelink positioning", so as to provide information required for ranging/sidelink positioning and a node for ranging/sidelink positioning, thereby ensuring the calculation of a result of ranging/sidelink positioning or improving the accuracy of ranging/sidelink positioning.

## Description

### FIELD

The present invention relates to the field of communication technologies, and in particular to a ranging/sidelink positioning method and apparatus, a device and a storage medium.

### BACKGROUND

In a communication system, both location management function (LMF) and a terminal device may perform ranging/sidelink positioning. The ranging/sidelink positioning refers to a result calculation between two terminal devices or between one terminal device and multiple terminal devices. However, in the related art, it is not clear which node of the terminal device and the LMF that performs the ranging/sidelink positioning and what information is required by each node, and the calculation of the ranging/sidelink positioning may be unable to be performed or may be inaccurate. Therefore, a ranging/sidelink positioning method is urgently needed to provide the information required for the ranging/sidelink positioning and the node for ranging/sidelink positioning to achieve the ranging/sidelink positioning calculation result or improve the accuracy of the ranging/sidelink positioning.

### SUMMARY

The present invention provides a ranging/sidelink positioning method and apparatus, a device and a storage medium, to provide information required for ranging/sidelink positioning and a node for the ranging/sidelink positioning to achieve a ranging/sidelink positioning calculation result or improve an accuracy of the ranging/sidelink positioning.

According to an aspect of the present invention, there is provided a ranging/sidelink positioning method, performed by a first terminal device, including: receiving a first ranging/sidelink positioning service request sent by a location management function (LMF), where the first ranging/sidelink positioning service request carries indication information; initiating ranging/sidelink positioning between the first terminal device and a second terminal device in response to the first ranging/sidelink positioning service request; and sending measurement data and/or a measurement result of the ranging/sidelink positioning to the LMF according to the indication information.

Optionally, in an embodiment of the present invention, the indication information includes at least one of: a measurement result calculation mode of the ranging/sidelink positioning; or requested information for the ranging/sidelink positioning for the first terminal device and the second terminal device.

Optionally, in an embodiment of the present invention, the measurement result calculation mode of the ranging/sidelink positioning includes at least one of: a measurement result calculation mode based on the LMF; a measurement result calculation mode based on the first terminal device and/or the second terminal device; or a hybrid measurement result calculation mode based on at least one terminal device and the LMF, where the at least one terminal device includes the first terminal device and/or the second terminal device.

Optionally, in an embodiment of the present invention, the requested information for the ranging/sidelink positioning for the first terminal device and the second terminal device includes at least one of: requested information of the measurement data; requested information of the measurement result; or requested information of the measurement data and the measurement result.

Optionally, in an embodiment of the present invention, only the measurement data is sent to the LMF when the measurement result calculation mode is a measurement result calculation mode based on the LMF; only the measurement data is sent to the LMF when the requested information is requested information of the measurement data.

Optionally, in an embodiment of the present invention, only the measurement result is sent to the LMF when the measurement result calculation mode is a measurement result calculation mode based on the first terminal device; only the measurement result is sent to the LMF when the requested information is requested information of the measurement result.

Optionally, in an embodiment of the present invention, sending the measurement result to the LMF includes: obtaining the measurement data; obtaining the measurement result by performing result calculation of the ranging/sidelink positioning on the measurement data; and sending the measurement result to the LMF.

Optionally, in an embodiment of the present invention, the measurement data and the measurement result are sent to the LMF when the measurement result calculation mode is a hybrid measurement result calculation mode based on at least one terminal device and the LMF, where the at least one terminal device includes the first terminal device and/or the second terminal device; the measurement data and the measurement result are sent to the LMF when the requested information is requested information of the measurement data and the measurement result.

Optionally, in an embodiment of the present invention, sending the measurement data and the measurement result to the LMF includes: obtaining the measurement data; obtaining a first measurement result by performing result calculation of the ranging/sidelink positioning on the measurement data; and sending the measurement data and the first measurement result to the LMF.

Optionally, in an embodiment of the present invention, the method further includes: sending preference computing node information of the ranging/sidelink positioning to the LMF.

According to a further aspect of the present invention, there is provided a ranging/sidelink positioning method, performed by an LMF, including: receiving a second ranging/sidelink positioning service request sent by an access and mobility management function (AMF); sending a first ranging/sidelink positioning service request to a first terminal device in response to the second ranging/sidelink positioning service request, where the first ranging/sidelink positioning service request carries indication information; and receiving measurement data and/or a measurement result of ranging/sidelink positioning sent by the first terminal device for the first ranging/sidelink positioning service request.

Optionally, in an embodiment of the present invention, the indication information includes at least one of: a measurement result calculation mode of the ranging/sidelink positioning; or requested information for the ranging/sidelink positioning for the first terminal device and a second terminal device.

Optionally, in an embodiment of the present invention, only the measurement data sent by the first terminal device for the first ranging/sidelink positioning service request is received when the measurement result calculation mode is a measurement result calculation mode based on the LMF; only the measurement data sent by the first terminal device for the first ranging/sidelink positioning service request is received when the requested information is requested information of the measurement data.

Optionally, in an embodiment of the present invention, after the measurement data and/or the measurement result sent by the first terminal device for the first ranging/sidelink positioning service request is received, the method further includes: obtaining the measurement result by performing result calculation of the ranging/sidelink positioning on the measurement data.

Optionally, in an embodiment of the present invention, only the measurement result sent by the first terminal device for the first ranging/sidelink positioning service request is received when the measurement result calculation mode is a measurement result calculation mode based on at least one terminal device, where the at least one terminal device includes the first terminal device and/or the second terminal device; only the measurement result sent by the first terminal device for the first ranging/sidelink positioning service request is received when the requested information is requested information of the measurement result.

Optionally, in an embodiment of the present invention, the measurement data and a first measurement result sent by the first terminal device for the first ranging/sidelink positioning service request are received when the measurement result calculation mode is a hybrid measurement result calculation mode based on at least one terminal device and the LMF, where the at least one terminal device includes the first terminal device and/or the second terminal device; the measurement data and the first measurement result sent by the first terminal device for the first ranging/sidelink positioning service request are received when the requested information is requested information of the measurement data and the measurement result.

Optionally, in an embodiment of the present invention, after the measurement data and the first measurement result sent by the first terminal device for the first ranging/sidelink positioning service request are received, the method further includes: determining a second measurement result according to the measurement data and the first measurement result.

Optionally, in an embodiment of the present invention, the method further includes: sending the measurement result to the AMF.

Optionally, in an embodiment of the present invention, the method further includes at least one of: determining the measurement result calculation mode; or determining the requested information for the ranging/sidelink positioning for the first terminal device and the second terminal device.

Optionally, in an embodiment of the present invention, determining the measurement result calculation mode includes: determining a measurement result calculation mode based on the first terminal device and/or the second terminal device as the measurement result calculation mode if only the first terminal device and/or the second terminal device supports measurement result calculation; determining a measurement result calculation mode based on the LMF as the measurement result calculation mode if only the LMF supports measurement result calculation; determining the measurement result calculation mode according to a mode selection policy if both the at least one terminal device and the LMF support measurement result calculation, where the at least one terminal device includes the first terminal device and/or the second terminal device.

Optionally, in an embodiment of the present invention, determining the measurement result calculation mode according to the mode selection policy includes at least one of: determining the measurement result calculation mode according to preference computing node information of the ranging/sidelink positioning; or determining the measurement result calculation mode according to operator policy information.

Optionally, in an embodiment of the present invention, determining the measurement result calculation mode according to the preference computing node information of the ranging/sidelink positioning includes at least one of: determining the measurement result calculation mode according to the preference computing node information of the ranging/sidelink positioning sent by the AMF; or determining the measurement result calculation mode according to the preference computing node information of the ranging/sidelink positioning sent by the terminal device.

Optionally, in an embodiment of the present invention, determining the requested information for the ranging/sidelink positioning for the first terminal device and the second terminal device includes: determining the requested information for the ranging/sidelink positioning for the first terminal device and the second terminal device according to the measurement result calculation mode determined.

According to a further aspect of the present invention, there is provided a ranging/sidelink positioning method, performed by an AMF, including: sending a second ranging/sidelink positioning service request to a location management function (LMF); and receiving a measurement result sent by the LMF for the second ranging/sidelink positioning service request.

Optionally, in an embodiment of the present invention, before sending the second ranging/sidelink positioning service request to the LMF, the method further includes: selecting the LMF in an LMF list according to a default rule.

In a further aspect of the present invention, there is provided a ranging/sidelink positioning apparatus, including: a receiving module configured to receive a first ranging/sidelink positioning service request sent by a location management function (LMF), where the first ranging/sidelink positioning service request carries indication information; an initiating module configured to initiate ranging/sidelink positioning between the first terminal device and a second terminal device in response to the first ranging/sidelink positioning service request; and a sending module configured to send measurement data and/or a measurement result of the ranging/sidelink positioning to the LMF according to the indication information.

In a further aspect of the present invention, there is provided a ranging/sidelink positioning apparatus, including: a receiving module configured to receive a second ranging/sidelink positioning service request sent by an access and mobility management function (AMF); a sending module configured to send a first ranging/sidelink positioning service request to a first terminal device in response to the second ranging/sidelink positioning service request, where the first ranging/sidelink positioning service request carries indication information; and a receiving module configured to measurement data and/or a measurement result of ranging/sidelink positioning sent by the first terminal device for the first ranging/sidelink positioning service request.

In a further aspect of the present invention, there is provided a ranging/sidelink positioning apparatus, including: a sending module configured to a second ranging/sidelink positioning service request to a location management function (LMF); and a receiving module configured to receive a measurement result sent by the LMF for the second ranging/sidelink positioning service request.

In a further aspect of the present invention, there is provided a terminal device including: a processor, and a memory having stored therein a computer program that, when executed by the processor, causes the device to implement the method provided in the embodiments of the aspect described above.

In a further aspect of the present invention, there is provided an LMF including: a processor, and a memory having stored therein a computer program that, when executed by the processor, causes the device to implement the method provided in the embodiments of another aspect described above.

In a further aspect of the present invention, there is provided an AMF including: a processor, and a memory having stored therein a computer program that, when executed by the processor, causes the device to implement the method provided in the embodiments of the further aspect described above.

In a further aspect of the present invention, there is provided a communication device including: a processor and an interface circuit. The interface circuit is configured to receive a code instruction and transmit the code instruction to the processor; and the processor is configured to run the code instruction to implement the method provided in the embodiments of the aspect described above.

In a further aspect of the present invention, there is provided a communication device including: a processor and an interface circuit. The interface circuit is configured to receive a code instruction and transmit the code instruction to the processor; and the processor is configured to run the code instruction to implement the method provided in the embodiments of another aspect described.

In a further aspect of the present invention, there is provided a communication device including: a processor and an interface circuit. The interface circuit is configured to receive a code instruction and transmit the code instruction to the processor; and the processor is configured to run the code instruction to implement the method provided in the embodiments of the further aspect described.

In a further aspect of the present invention, there is provided a computer-readable storage medium having stored therein instructions that, when executed, cause the method provided in the embodiments of the aspect to be implemented.

In a further aspect of the present invention, there is provided a computer-readable storage medium having stored therein instructions that, when executed, cause the method provided in the embodiments of another aspect to be implemented.

In a further aspect of the present invention, there is provided a computer-readable storage medium having stored therein instructions that, when executed, cause the method provided in the embodiments of the further aspect to be implemented.

In conclusion, in the embodiments of the present invention, the first terminal device receives the first ranging/sidelink positioning service request sent by the LMF, where the first ranging/sidelink positioning service request carries the indication information; initiates the ranging/sidelink positioning between the first terminal device and the second terminal device; and sends the measurement data and/or the measurement result of the ranging/sidelink positioning to the LMF according to the indication information. In the embodiments of the present invention, the first terminal device can determine the information to be sent to the LMF via the indication information, avoiding the situation where the information provided by the first terminal device in the ranging/sidelink positioning is ambiguous, and thus the calculation of the ranging/sidelink positioning is unable to be performed or is inaccurate. The present invention provides a processing method for "ranging/sidelink positioning" to provide the information required for the ranging/sidelink positioning and the node for the ranging/sidelink positioning to achieve the ranging/sidelink positioning calculation result or improve the accuracy of the ranging/sidelink positioning.

### BRIEF DESCRIPTION OF THE DRAWINGS

The above and/or additional aspects and advantages of the present invention will become apparent and more readily appreciated from the following descriptions made with reference to the drawings, in which:
FIG. 1 is a flowchart of a ranging/sidelink positioning method provided by an embodiment of the present invention;
FIG. 2 is a flowchart of a ranging/sidelink positioning method provided by another embodiment of the present invention;
FIG. 3 is a flowchart of a ranging/sidelink positioning method provided by a still another embodiment of the present invention;
FIG. 4 is a flowchart of a ranging/sidelink positioning method provided by a further embodiment of the present invention;
FIG. 5 is a flowchart of a ranging/sidelink positioning method provided by a further embodiment of the present invention;
FIG. 6 is a flowchart of a ranging/sidelink positioning method provided by a further embodiment of the present invention;
FIG. 7 is a flowchart of a ranging/sidelink positioning method provided by a further embodiment of the present invention;
FIG. 8 is a flowchart of a ranging/sidelink positioning method provided by a further embodiment of the present invention;
FIG. 9 is a flowchart of a ranging/sidelink positioning method provided by a further embodiment of the present invention;
FIG. 10 is a flowchart of a ranging/sidelink positioning method provided by a further embodiment of the present invention;
FIG. 11 is a flowchart of a ranging/sidelink positioning method provided by a further embodiment of the present invention;
FIG. 12 is a flowchart of a ranging/sidelink positioning method provided by a further embodiment of the present invention;
FIG. 13 is a flowchart of a ranging/sidelink positioning method provided by a further embodiment of the present invention;
FIG. 14 is a schematic diagram of a ranging/sidelink positioning apparatus provided by an embodiment of the present invention;
FIG. 15 is a schematic diagram of a ranging/sidelink positioning apparatus provided by another embodiment of the present invention;
FIG. 16 is a schematic diagram of a ranging/sidelink positioning apparatus provided by still another embodiment of the present invention;
FIG. 17 is a block diagram of a terminal device provided by an embodiment of the present invention; and
FIG. 18 is a block diagram of a network device provided by an embodiment of the present invention.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with embodiments of the present invention. They are merely examples of devices and methods consistent with some aspects of embodiments of the present invention as recited in the appended claims.

Terms used herein in the embodiments of the present invention are for the purpose of describing specific embodiments, but should not be construed to limit the embodiments of the present invention. As used in embodiments of the present invention and the appended claims, "a/an" and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in embodiments of the present invention for describing various information, these information should not be limited by these terms. These terms are used for distinguishing information of the same type from each other. For example, first information may also be referred to as second information, and similarly, the second information may also be referred to as the first information, without departing from the scope of embodiments of the present invention. As used herein, the term "if" may be construed to mean "when" or "upon" or "in response to determining" depending on the context.

Network elements or network functions involved in the embodiments of the present invention may be implemented by a separate hardware device or by software in a hardware device, which is not limited in the embodiments of the present invention.

A ranging/sidelink positioning method and apparatus, a device and a storage medium provided by the present invention will be described in detail below with reference to the accompanying drawings.

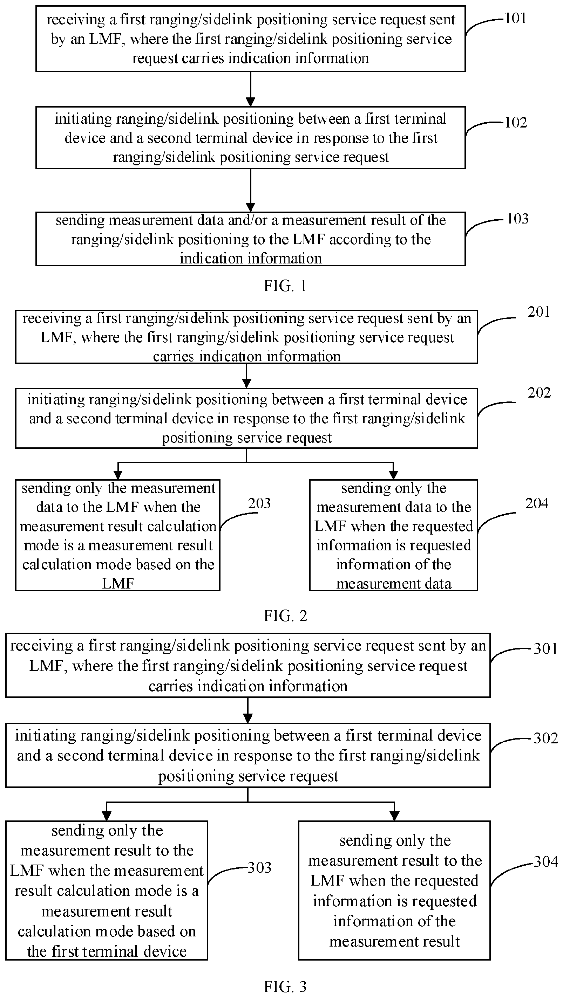

FIG. 1 is a flowchart of a ranging/sidelink positioning method provided by an embodiment of the present invention. The method is performed by a first terminal device. As shown in FIG. 1, the ranging/sidelink positioning method may include the following steps.

In step 101, a first ranging/sidelink positioning service request sent by a location management function (LMF) is received. The first ranging/sidelink positioning service request carries indication information.

It should be noted that, in an embodiment of the present invention, the terminal device may be a device that provides voice and/or data connectivity to a user. The terminal device may communicate with one or more core networks via a radio access network (RAN). The terminal device may be an Internet of Things terminal, such as a sensor device, a mobile phone (or referred to as a "cellular" phone) and a computer with an Internet of Things terminal. For example, it may be a fixed, portable, pocket-sized, handheld, built-in computer or vehicle-mounted apparatus, for example, a station (STA), a subscriber unit, a subscriber station, a mobile station, a mobile, a remote station, an access point, a remote terminal, an access terminal, a user terminal, or a user agent. Alternatively, the terminal device may be a device of an unmanned aerial vehicle. Alternatively, the terminal device may be a vehicle-mounted device, for example, a driving computer with a wireless communication function, or a wireless communication device externally connected with a driving computer. Alternatively, the terminal device may be a roadside device, such as a street lamp, a signal lamp or other roadside devices with a wireless communication function.

It should be noted that, in an embodiment of the present invention, the first terminal device refers to a terminal device that has a session connection with the LMF. Wording "first" is only used to indicate a terminal device that communicates with the LMF. The first terminal device does not specifically refer to a fixed terminal device.

In an embodiment of the present invention, the indication information includes at least one of: a measurement result calculation mode of the ranging/sidelink positioning; or requested information for the ranging/sidelink positioning for the first terminal device and a second terminal device.

Further, in an embodiment of the present invention, the measurement result calculation mode of the ranging/sidelink positioning includes at least one of: a measurement result calculation mode based on the LMF; a measurement result calculation mode based on the first terminal device and/or the second terminal device; or a hybrid measurement result calculation mode based on at least one terminal device and the LMF, the at least one terminal device including the first terminal device and/or the second terminal device.

Further, in an embodiment of the present invention, the requested information for the ranging/sidelink positioning for the first terminal device and the second terminal device includes at least one of: requested information of the measurement data; requested information of the measurement result; or requested information of the measurement data and the measurement result.

Further, in an embodiment of the present invention, only the measurement data is sent to the LMF when the measurement result calculation mode is a measurement result calculation mode based on the LMF; only the measurement data is sent to the LMF when the requested information is requested information of the measurement data.

Further, in an embodiment of the present invention, only the measurement result is sent to the LMF when the measurement result calculation mode is a measurement result calculation mode based on the first terminal device; only the measurement result is sent to the LMF when the requested information is requested information of the measurement result.

Further, in an embodiment of the present invention, sending the measurement result to the LMF includes: obtaining the measurement data; obtaining the measurement result by performing result calculation of the ranging/sidelink positioning on the measurement data; and sending the measurement result to the LMF.

Further, in an embodiment of the present invention, the measurement data and the measurement result are sent to the LMF when the measurement result calculation mode is a hybrid measurement result calculation mode based on at least one terminal device and the LMF, where the at least one terminal device includes the first terminal device and/or the second terminal device; the measurement data and measurement result are sent to the LMF when the requested information is requested information of the measurement data and the measurement result.

Further, in an embodiment of the present invention, sending the measurement data and the measurement result to the LMF includes: obtaining the measurement data; obtaining a first measurement result by performing result calculation of the ranging/sidelink positioning on the measurement data; and sending the measurement data and the first measurement result to the LMF.

In step 102, ranging/sidelink positioning between a first terminal device and a second terminal device is initiated in response to the first ranging/sidelink positioning service request.

In step 103, measurement data and/or a measurement result of the ranging/sidelink positioning is sent to the LMF according to the indication information.

Further, in an embodiment of the present invention, the method further includes: sending preference computing node information of the ranging/sidelink positioning to the LMF.

In conclusion, in the embodiments of the present invention, the first terminal device receives the first ranging/sidelink positioning service request sent by the LMF, where the first ranging/sidelink positioning service request carries the indication information; initiates the ranging/sidelink positioning between the first terminal device and the second terminal device; and sends the measurement data and/or the measurement result of the ranging/sidelink positioning to the LMF according to the indication information. In the embodiments of the present invention, the first terminal device can determine the information to be sent to the LMF via the indication information, avoiding the situation where the information provided by the first terminal device in the ranging/sidelink positioning is ambiguous, and thus the calculation of the ranging/sidelink positioning is unable to be performed or is inaccurate. The present invention provides a processing method for "ranging/sidelink positioning" to provide the information required for the ranging/sidelink positioning and the node for the ranging/sidelink positioning to achieve the ranging/sidelink positioning calculation result or improve the accuracy of the ranging/sidelink positioning.

FIG. 2 is a flowchart of a ranging/sidelink positioning method provided by an embodiment of the present invention. The method is performed by the first terminal device. As shown in FIG. 2, the ranging/sidelink positioning method may include the following steps.

In step 201, a first ranging/sidelink positioning service request sent by a location management function (LMF) is received. The first ranging/sidelink positioning service request carries indication information.

In step 202, ranging/sidelink positioning between a first terminal device and a second terminal device is initiated in response to the first ranging/sidelink positioning service request.

One of step 203 and step 204 is performed. In step 203, only the measurement data is sent to the LMF when the measurement result calculation mode is a measurement result calculation mode based on the LMF; and in step 204, only the measurement data is sent to the LMF when the requested information is requested information of the measurement data.

Further, in an embodiment of the present invention, the measurement data refers to data collected when the first terminal device obtains the measurement result. The measurement data does not refer to fixed data. The measurement data may include at least one of a reference signal received power (RSRP) of a cell, a signal to interference plus noise ratio (SINR) of a cell, or location data of a terminal device. For example, when a data type included in the measurement data changes, the measurement data may change accordingly. For example, when data included in the measurement data changes, the measurement data may change accordingly.

Further, in an embodiment of the present invention, the first ranging/sidelink positioning service request refers to a request sent by the LMF to the first terminal device. The first ranging/sidelink positioning service request is only used to indicate that the request is sent by the LMF to the first terminal device, and does not specifically refer to a fixed request. For example, when the indication information changes, the first ranging/sidelink positioning service request may change accordingly.

Further, in an embodiment of the present invention, in the ranging/sidelink positioning between the first terminal device and the second terminal device, the first terminal device may perform ranging/sidelink positioning on the second terminal device, and the second terminal device may also perform the ranging/sidelink positioning on the first terminal device.

For example, in an embodiment of the present invention, when the first terminal device receives the first ranging/sidelink positioning service request, the first terminal device may detect the information carried in the indication information. The first terminal device may determine the information to be sent to the LMF based on the indication information. The measurement result calculation mode is used to indicate a mode for calculating the measurement result. The measurement result calculation mode does not refer to a fixed mode.

The measurement result calculation mode includes at least one of: a measurement result calculation mode based on the LMF; a measurement result calculation mode based on the first terminal device and/or the second terminal device; or a hybrid measurement result calculation mode based on at least one terminal device and the LMF, where the at least one terminal device includes the first terminal device and/or the second terminal device.

In an embodiment of the present invention, the measurement result calculation mode based on the LMF means that the LMF can determine the measurement result based on the measurement data sent by the first terminal device. The measurement result calculation mode based on the first terminal device means that the first terminal device can determine the measurement result based on the measurement data sent by the first terminal device. The hybrid measurement result calculation mode based on at least one terminal device and the LMF refers to a mode in which the terminal device and the LMF determine the measurement result based on the measurement data sent by the first terminal device. That is, the positioning result is determined by at least one terminal device and the LMF in a manner of division of work and collaboration. The at least one terminal device includes a first terminal device and/or a second terminal device.

In an embodiment of the present invention, the indication information includes at least one of: a measurement result calculation mode of the ranging/sidelink positioning; or requested information for the ranging/sidelink positioning for the first terminal device and the second terminal device.

For example, in an embodiment of the present invention, when the indication information includes the measurement result calculation mode of the ranging/sidelink positioning, and the measurement result calculation mode is the LMF-based measurement result calculation mode, the first terminal device only send the measurement data to the LMF.

For example, in an embodiment of the present invention, when the indication information includes requested information for the ranging/sidelink positioning for the first terminal device and the second terminal device, and the requested information is requested information of the measurement data, the first terminal device only sends the measurement data to the LMF.

For example, in an embodiment of the present invention, the requested information may be determined by the measurement result calculation mode of the ranging/sidelink positioning. For example, when the measurement result calculation mode of the ranging/sidelink positioning is the LMF-based measurement result calculation mode, the requested information may be requested information of the measurement data.

In conclusion, in the embodiments of the present invention, the first terminal device receives the first ranging/sidelink positioning service request sent by the LMF, where the first ranging/sidelink positioning service request carries the indication information; initiates the ranging/sidelink positioning between the first terminal device and the second terminal device; and sends the measurement data and/or the measurement result of the ranging/sidelink positioning to the LMF according to the indication information. In the embodiments of the present invention, the first terminal device can determine the information to be sent to the LMF via the information included in the indication information, avoiding the situation where the information provided by the first terminal device in the ranging/sidelink positioning is ambiguous, and thus the calculation of the ranging/sidelink positioning is unable to be performed or is inaccurate. The present invention specifically discloses the specific situation where the first terminal device sends the measurement data to the LMF according to the indication information. The present invention provides a processing method for the situation of "ranging/sidelink positioning" to provide the information required for the ranging/sidelink positioning and the node for the ranging/sidelink positioning to achieve the ranging/sidelink positioning calculation result or improve the accuracy of the ranging/sidelink positioning.

FIG. 3 is a flowchart of a ranging/sidelink positioning method provided by an embodiment of the present invention. The method is performed by the first terminal device. As shown in FIG. 3, the ranging/sidelink positioning method may include the following steps.

In step 301, a first ranging/sidelink positioning service request sent by a location management function (LMF) is received. The first ranging/sidelink positioning service request carries indication information.

In step 302, ranging/sidelink positioning between a first terminal device and a second terminal device is initiated in response to the first ranging/sidelink positioning service request.

One of step 303 and step 304 is performed. In step 303, only the measurement result is sent to the LMF when the measurement result calculation mode is a measurement result calculation mode based on the first terminal device; and in step 304, only the measurement result is sent to the LMF when the requested information is requested information of the measurement result.

In an embodiment of the present invention, the measurement result refers to a measurement result obtained by the first terminal device based on the measurement data. The measurement result may be a relative distance and angle between the two terminal devices.

Further, in an embodiment of the present invention, the indication information includes at least one of: a measurement result calculation mode of the ranging/sidelink positioning; or requested information for the ranging/sidelink positioning for the first terminal device and the second terminal device.

In an embodiment of the present invention, when the indication information includes the measurement result calculation mode of the ranging/sidelink positioning, and the measurement result calculation mode is the measurement result calculation mode based on the first terminal device, the first terminal device only send the measurement result to the LMF.

For example, in an embodiment of the present invention, when the indication information includes requested information for the ranging/sidelink positioning for the first terminal device and the second terminal device, and the requested information is requested information of the measurement result, the first terminal device only sends the measurement result to the LMF.

Further, in an embodiment of the present invention, when the first terminal device sends the measurement result to the LMF, the first terminal device may obtain the measurement data; obtains the measurement result by performing result calculation of the ranging/sidelink positioning on the measurement data; and sends the measurement result to the LMF.

For example, in an embodiment of the present invention, the requested information may be determined by the measurement result calculation mode of the ranging/sidelink positioning. For example, when the measurement result calculation mode of the ranging/sidelink positioning is the measurement result calculation mode based on the first terminal device, the requested information may be requested information of the measurement result.

In conclusion, in the embodiments of the present invention, the first terminal device receives the first ranging/sidelink positioning service request sent by the LMF, where the first ranging/sidelink positioning service request carries the indication information; initiates the ranging/sidelink positioning between the first terminal device and the second terminal device; and sends the measurement data and/or the measurement result of the ranging/sidelink positioning to the LMF according to the indication information. In the embodiments of the present invention, the first terminal device can determine the information to be sent to the LMF via the information included in the indication information, avoiding the situation where the information provided by the first terminal device in the ranging/sidelink positioning is ambiguous, and thus the calculation of the ranging/sidelink positioning is unable to be performed or is inaccurate. The present invention specifically discloses the specific situation where the first terminal device sends the measurement result to the LMF according to the indication information. The present invention provides a processing method for the situation of "ranging/sidelink positioning" to provide the information required for the ranging/sidelink positioning and the node for the ranging/sidelink positioning to achieve the ranging/sidelink positioning calculation result or improve the accuracy of the ranging/sidelink positioning.

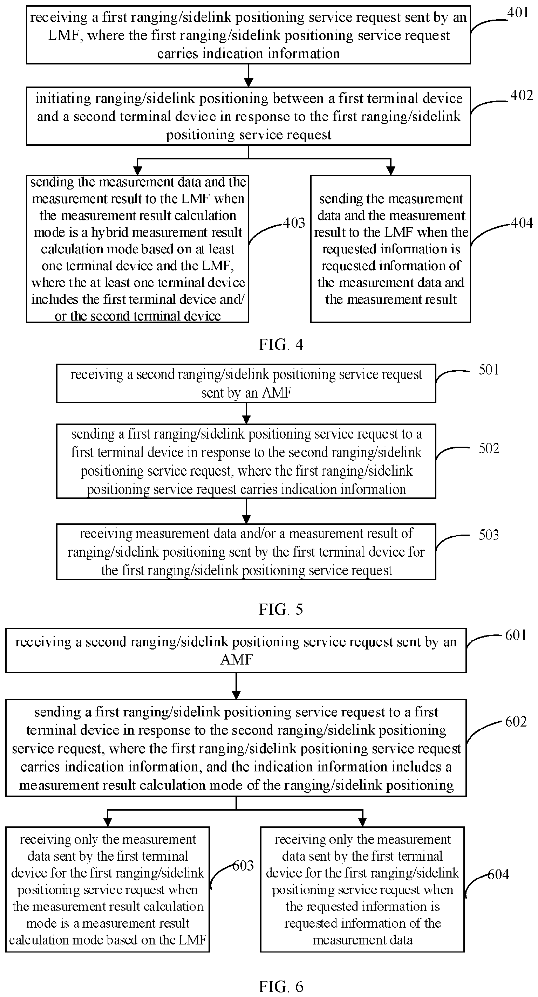

FIG. 4 is a flowchart of a ranging/sidelink positioning method provided by an embodiment of the present invention. The method is performed by the first terminal device. As shown in FIG. 4, the ranging/sidelink positioning method may include the following steps.

In step 401, a first ranging/sidelink positioning service request sent by a location management function (LMF) is received. The first ranging/sidelink positioning service request carries indication information.

In step 402, ranging/sidelink positioning between a first terminal device and a second terminal device is initiated in response to the first ranging/sidelink positioning service request.

One of step 403 and step 404 is performed. In step 403, the measurement data and the measurement result are sent to the LMF when the measurement result calculation mode is a hybrid measurement result calculation mode based on at least one terminal device and the LMF, in which the at least one terminal device includes the first terminal device and/or the second terminal device; and in step 404, the measurement data and the measurement result are sent to the LMF when the requested information is requested information of the measurement data and the measurement result.

In an embodiment of the present invention, when the first terminal device sends the measurement data and the measurement result to the LMF, the first terminal device obtains the measurement data; obtains a first measurement result by performing result calculation of the ranging/sidelink positioning on the measurement data; and sends the measurement data and the first measurement result to the LMF.

Further, in an embodiment of the present invention, the first measurement result refers to the measurement result obtained by the result calculation of the ranging/sidelink positioning performed on the measurement data by the at least one terminal device in a case where the measurement result calculation mode is the hybrid measurement result calculation mode based on at least one terminal device and the LMF or the requested information is requested information of the measurement data and the measurement result, and the measurement result is sent to the LMF by the first terminal device. Wording "first" of the first measurement result is only used to refer to a measurement result of the measurement data and the measurement result sent to the LMF from the first terminal device, and the first measurement result does not specifically refer to a fixed measurement result. For example, when the measurement data changes, the first measurement result may change accordingly.

Further, in an embodiment of the present invention, the indication information includes at least one of: a measurement result calculation mode of the ranging/sidelink positioning; or requested information for the ranging/sidelink positioning for the first terminal device and the second terminal device.

Further, in an embodiment of the present invention, when the indication information includes the measurement result calculation mode of the ranging/sidelink positioning, and the measurement result calculation mode is the hybrid measurement result calculation mode based on at least one terminal device and the LMF, the first terminal device sends the measurement data and the measurement result to the LMF. Specifically, when the indication information includes the measurement result calculation mode of the ranging/sidelink positioning, and the measurement result calculation mode is the hybrid measurement result calculation mode based on at least one terminal device and the LMF, the first terminal device sends the measurement data and the first measurement result to the LMF.

For example, in an embodiment of the present invention, when the indication information includes requested information for the ranging/sidelink positioning for the first terminal device and the second terminal device, and the requested information is requested information of the measurement data and the measurement result, the first terminal device sends the measurement data and the measurement result to the LMF. Specifically, when the indication information includes requested information for the ranging/sidelink positioning for the first terminal device and the second terminal device, and the requested information is requested information of the measurement data and the measurement result, the first terminal device sends the measurement data and the first measurement result to the LMF.

For example, in an embodiment of the present invention, the requested information may be determined by the measurement result calculation mode of the ranging/sidelink positioning. For example, when the measurement result calculation mode of the ranging/sidelink positioning is the hybrid measurement result calculation mode based on at least one terminal device and the LMF, the requested information may be requested information of the measurement data and the measurement result.

In conclusion, in the embodiments of the present invention, the first terminal device receives the first ranging/sidelink positioning service request sent by the LMF, where the first ranging/sidelink positioning service request carries the indication information; initiates the ranging/sidelink positioning between the first terminal device and the second terminal device; and sends the measurement data and/or the measurement result of the ranging/sidelink positioning to the LMF according to the indication information. In the embodiments of the present invention, the first terminal device can determine the information to be sent to the LMF via the information included in the indication information, avoiding the situation where the information provided by the first terminal device in the ranging/sidelink positioning is ambiguous, and thus the calculation of the ranging/sidelink positioning is unable to be performed or is inaccurate. The present invention specifically discloses the specific situation where the first terminal device sends the measurement data and the measurement result to the LMF according to the indication information. The present invention provides a processing method for the situation of "ranging/sidelink positioning" to provide the information required for the ranging/sidelink positioning and the node for the ranging/sidelink positioning to achieve the ranging/sidelink positioning calculation result or improve the accuracy of the ranging/sidelink positioning.

FIG. 5 is a flowchart of a ranging/sidelink positioning method provided by an embodiment of the present invention. The method is performed by the LMF. As shown in FIG. 5, the method includes the following steps.

In step 501, a second ranging/sidelink positioning service request sent by an access and mobility management function (AMF) is received.

In an embodiment of the present invention, the indication information includes at least one of: a measurement result calculation mode of the ranging/sidelink positioning; or requested information for the ranging/sidelink positioning for the first terminal device and a second terminal device.

In an embodiment of the present invention, only the measurement data sent by the first terminal device for the first ranging/sidelink positioning service request is received when the measurement result calculation mode is a measurement result calculation mode based on the LMF; only the measurement data sent by the first terminal device for the first ranging/sidelink positioning service request is received when the requested information is requested information of the measurement data.

Further, in an embodiment of the present invention, after the measurement data and/or the measurement result sent by the first terminal device for the first ranging/sidelink positioning service request is received, the method further includes: obtaining the measurement result by performing result calculation of the ranging/sidelink positioning on the measurement data.

Further, in an embodiment of the present invention, only the measurement result sent by the first terminal device for the first ranging/sidelink positioning service request is received when the measurement result calculation mode is a measurement result calculation mode based on at least one terminal device, where the at least one terminal device includes the first terminal device and/or the second terminal device; only the measurement result sent by the first terminal device for the first ranging/sidelink positioning service request is received when the requested information is requested information of the measurement result.

Further, in an embodiment of the present invention, the measurement data and a first measurement result sent by the first terminal device for the first ranging/sidelink positioning service request are received when the measurement result calculation mode is a hybrid measurement result calculation mode based on at least one terminal device and the LMF, where the at least one terminal device includes the first terminal device and/or the second terminal device; the measurement data and the first measurement result sent by the first terminal device for the first ranging/sidelink positioning service request are received when the requested information is requested information of the measurement data and the measurement result.

Further, in an embodiment of the present invention, after the measurement data and the first measurement result sent by the first terminal device for the first ranging/sidelink positioning service request are received, the method further includes: determining a second measurement result according to the measurement data and the first measurement result.

Further, in an embodiment of the present invention, the method further includes: sending the measurement result to the AMF.

Further, in an embodiment of the present invention, the method further includes at least one of: determining the measurement result calculation mode; or determining the requested information for the ranging/sidelink positioning for the first terminal device and the second terminal device.

Further, in an embodiment of the present invention, determining the measurement result calculation mode includes: determining a measurement result calculation mode based on the first terminal device and/or the second terminal device as the measurement result calculation mode if only the first terminal device and/or the second terminal device supports measurement result calculation; determining a measurement result calculation mode based on the LMF as the measurement result calculation mode if only the LMF supports measurement result calculation; determining the measurement result calculation mode according to a mode selection policy if both the at least one terminal device and the LMF support measurement result calculation, where the at least one terminal device includes the first terminal device and/or the second terminal device.

Further, in an embodiment of the present invention, determining the measurement result calculation mode according to the mode selection policy includes at least one of: determining the measurement result calculation mode according to preference computing node information of the ranging/sidelink positioning; or determining the measurement result calculation mode according to operator policy information.

Further, in an embodiment of the present invention, determining the measurement result calculation mode according to the preference computing node information of the ranging/sidelink positioning includes at least one of: determining the measurement result calculation mode according to the preference computing node information of the ranging/sidelink positioning sent by the AMF; or determining the measurement result calculation mode according to the preference computing node information of the ranging/sidelink positioning sent by the terminal device.

Further, in an embodiment of the present invention, determining the requested information for the ranging/sidelink positioning for the first terminal device and the second terminal device includes: determining the requested information for the ranging/sidelink positioning for the first terminal device and the second terminal device according to the measurement result calculation mode determined.

In step 502, a first ranging/sidelink positioning service request is sent to a first terminal device in response to the second ranging/sidelink positioning service request. The first ranging/sidelink positioning service request carries indication information.

In step 503, measurement data and/or a measurement result of ranging/sidelink positioning sent by the first terminal device for the first ranging/sidelink positioning service request is received.

In conclusion, in the embodiments of the present invention, the LMF receives the second ranging/sidelink positioning service request sent by the AMF; sends the first ranging/sidelink positioning service request to the first terminal device in response to the second ranging/sidelink positioning service request, in which the first ranging/sidelink positioning service request carries indication information; and receives the measurement data and/or the measurement result of the ranging/sidelink positioning sent by the first terminal device for the first ranging/sidelink positioning service request. In the embodiments of the present invention, the first terminal device can determine the information to be sent to the LMF via the indication information sent to the first terminal device from the LMF, avoiding the situation where the information provided by the first terminal device in the ranging/sidelink positioning is ambiguous, and thus the calculation of the ranging/sidelink positioning is unable to be performed or is inaccurate. The present invention provides a processing method for the situation of "ranging/sidelink positioning" to provide the information required for the ranging/sidelink positioning and the node for the ranging/sidelink positioning to achieve the ranging/sidelink positioning calculation result or improve the accuracy of the ranging/sidelink positioning.

FIG. 6 is a flowchart of a ranging/sidelink positioning method provided by an embodiment of the present invention. The method is performed by the LMF. As shown in FIG. 6, the method includes the following steps.

In step 601, a second ranging/sidelink positioning service request sent by an AMF is received.

In step 602, a first ranging/sidelink positioning service request is sent to a first terminal device in response to the second ranging/sidelink positioning service request. The first ranging/sidelink positioning service request carries indication information, and the indication information includes a measurement result calculation mode of the ranging/sidelink positioning.

One of step 603 and step 604 is performed. In step 603, only the measurement data sent by the first terminal device for the first ranging/sidelink positioning service request is received when the measurement result calculation mode is a measurement result calculation mode based on the LMF; and in step 604, only the measurement data sent by the first terminal device for the first ranging/sidelink positioning service request is received when the requested information is requested information of the measurement data.

Further, in an embodiment of the present invention, the indication information includes at least one of: a measurement result calculation mode of the ranging/sidelink positioning; or requested information for the ranging/sidelink positioning for the first terminal device and a second terminal device.

Further, in an embodiment of the present invention, when the indication information includes the measurement result calculation mode of the ranging/sidelink positioning, and the measurement result calculation mode is the measurement result calculation mode based on the LMF, the LMF receives only the measurement data sent by the first terminal device for the first ranging/sidelink positioning service request.

Further, in an embodiment of the present invention, when indication information includes the requested information for the ranging/sidelink positioning for the first terminal device and the second terminal device, and the requested information is requested information of the measurement data, the LMF receives only the measurement data sent by the first terminal device for the first ranging/sidelink positioning service request.

In conclusion, in the embodiments of the present invention, the LMF receives the second ranging/sidelink positioning service request sent by the AMF; sends the first ranging/sidelink positioning service request to the first terminal device in response to the second ranging/sidelink positioning service request, in which the first ranging/sidelink positioning service request carries indication information; and receives the measurement data and/or the measurement result of the ranging/sidelink positioning sent by the first terminal device for the first ranging/sidelink positioning service request. In the embodiments of the present invention, the first terminal device can determine the information to be sent to the LMF via the indication information sent to the first terminal device from the LMF, avoiding the situation where the information provided by the first terminal device in the ranging/sidelink positioning is ambiguous, and thus the calculation of the ranging/sidelink positioning is unable to be performed or is inaccurate. The present invention specifically discloses the specific situation where the LMF receives the measurement data sent by the first terminal device. The present invention provides a processing method for the situation of "ranging/sidelink positioning" to provide the information required for the ranging/sidelink positioning and the node for the ranging/sidelink positioning to achieve the ranging/sidelink positioning calculation result or improve the accuracy of the ranging/sidelink positioning.

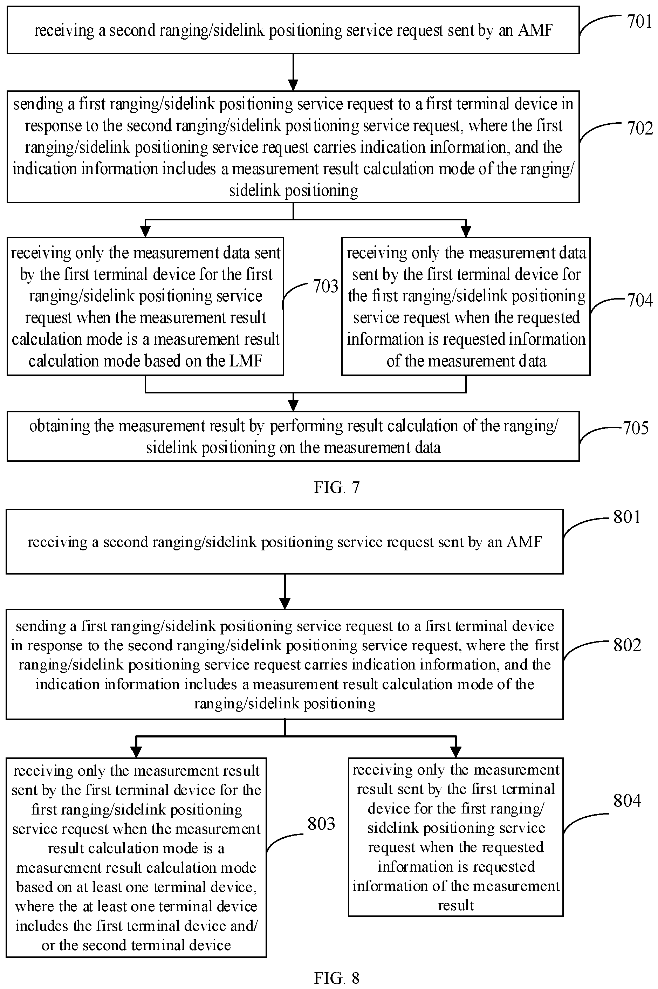

FIG. 7 is a flowchart of a ranging/sidelink positioning method provided by an embodiment of the present invention. The method is performed by the LMF. As shown in FIG. 7, the method includes the following steps.

In step 701, a second ranging/sidelink positioning service request sent by an AMF is received.

In step 702, a first ranging/sidelink positioning service request is sent to a first terminal device in response to the second ranging/sidelink positioning service request. The first ranging/sidelink positioning service request carries indication information, and the indication information includes a measurement result calculation mode of the ranging/sidelink positioning.

One of step 703 and step 704 is performed. In step 703, only the measurement data sent by the first terminal device for the first ranging/sidelink positioning service request is received when the measurement result calculation mode is a measurement result calculation mode based on the LMF; or in step 704, only the measurement data sent by the first terminal device for the first ranging/sidelink positioning service request is received when the requested information is requested information of the measurement data.

In step 705, the measurement result is obtained by performing result calculation of the ranging/sidelink positioning on the measurement data.

Other details about steps 701 to 704 may be referred to the description of the above embodiments, which are not described again in the embodiments of the present invention.

In an embodiment of the present invention, when the LMF receives the measurement data sent by the first terminal device, the LMF can perform the result calculation of the ranging/sidelink positioning on the measurement data to obtain the measurement result.

Further, in an embodiment of the present invention, when the LMF obtains the measurement result, the LMF may send the measurement result to the AMF.

In conclusion, in the embodiments of the present invention, the LMF receives the second ranging/sidelink positioning service request sent by the AMF; sends the first ranging/sidelink positioning service request to the first terminal device in response to the second ranging/sidelink positioning service request, in which the first ranging/sidelink positioning service request carries indication information; and receives the measurement data and/or the measurement result of the ranging/sidelink positioning sent by the first terminal device for the first ranging/sidelink positioning service request. In the embodiments of the present invention, the first terminal device can determine the information to be sent to the LMF via the indication information sent to the first terminal device from the LMF, avoiding the situation where the information provided by the first terminal device in the ranging/sidelink positioning is ambiguous, and thus the calculation of the ranging/sidelink positioning is unable to be performed or is inaccurate. The present invention specifically discloses the specific situation where the LMF receives the measurement data sent by the first terminal device and obtains the measurement result according to the measurement data. The present invention provides a processing method for the situation of "ranging/sidelink positioning" to provide the information required for the ranging/sidelink positioning and the node for the ranging/sidelink positioning to achieve the ranging/sidelink positioning calculation result or improve the accuracy of the ranging/sidelink positioning.

FIG. 8 is a flowchart of a ranging/sidelink positioning method provided by an embodiment of the present invention. The method is performed by the LMF. As shown in FIG. 8, the method includes the following steps.

In step 801, a second ranging/sidelink positioning service request sent by an AMF is received.

In step 802, a first ranging/sidelink positioning service request is sent to a first terminal device in response to the second ranging/sidelink positioning service request. The first ranging/sidelink positioning service request carries indication information, and the indication information includes a measurement result calculation mode of the ranging/sidelink positioning.

One of step 803 and step 804 is performed. In step 803, only the measurement result sent by the first terminal device for the first ranging/sidelink positioning service request is received when the measurement result calculation mode is a measurement result calculation mode based on at least one terminal device, in which the at least one terminal device includes the first terminal device and/or the second terminal device; and in step 804, only the measurement result sent by the first terminal device for the first ranging/sidelink positioning service request is received when the requested information is requested information of the measurement result.

Further, in an embodiment of the present invention, the indication information includes at least one of: a measurement result calculation mode of the ranging/sidelink positioning; or requested information for the ranging/sidelink positioning for the first terminal device and a second terminal device.

Further, in an embodiment of the present invention, when the indication information includes the measurement result calculation mode of the ranging/sidelink positioning, and the measurement result calculation mode is a measurement result calculation mode based on at least one terminal device, the LMF receives only the measurement result sent by the first terminal device for the first ranging/sidelink positioning service request.

Further, in an embodiment of the present invention, when the indication information includes the requested information for the ranging/sidelink positioning for the first terminal device and the second terminal device, and the requested information is requested information of the measurement result, the LMF receives only the measurement result sent by the first terminal device for the first ranging/sidelink positioning service request.

In addition, in an embodiment of the present invention, when the LMF receives the measurement result, it may sends the measurement result to the AMF.

In conclusion, in the embodiments of the present invention, the LMF receives the second ranging/sidelink positioning service request sent by the AMF; sends the first ranging/sidelink positioning service request to the first terminal device in response to the second ranging/sidelink positioning service request, in which the first ranging/sidelink positioning service request carries indication information; and receives the measurement data and/or the measurement result of the ranging/sidelink positioning sent by the first terminal device for the first ranging/sidelink positioning service request. In the embodiments of the present invention, the first terminal device can determine the information to be sent to the LMF via the indication information sent to the first terminal device from the LMF, avoiding the situation where the information provided by the first terminal device in the ranging/sidelink positioning is ambiguous, and thus the calculation of the ranging/sidelink positioning is unable to be performed or is inaccurate. The present invention specifically discloses the specific situation where the LMF receives the measurement result sent by the first terminal device. The present invention provides a processing method for the situation of "ranging/sidelink positioning" to provide the information required for the ranging/sidelink positioning and the node for the ranging/sidelink positioning to achieve the ranging/sidelink positioning calculation result or improve the accuracy of the ranging/sidelink positioning.

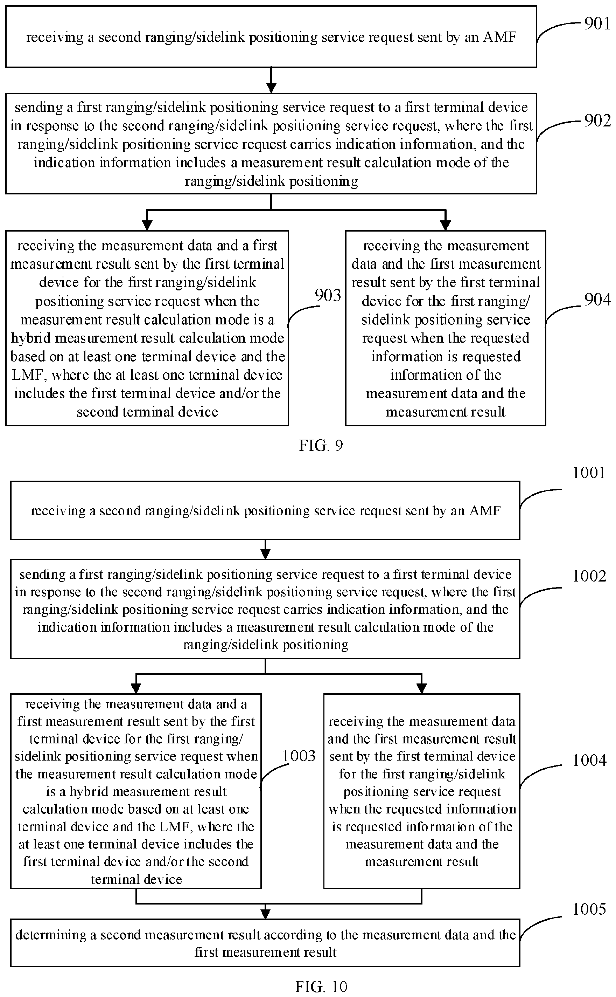

FIG. 9 is a flowchart of a ranging/sidelink positioning method provided by an embodiment of the present invention. The method is performed by the LMF. As shown in FIG. 9, the method includes the following steps.

In step 901, a second ranging/sidelink positioning service request sent by an AMF is received.

In step 902, a first ranging/sidelink positioning service request is sent to a first terminal device in response to the second ranging/sidelink positioning service request. The first ranging/sidelink positioning service request carries indication information, and the indication information includes a measurement result calculation mode of the ranging/sidelink positioning.

One of step 903 and step 904 is performed. In step 903, the measurement data and a first measurement result sent by the first terminal device for the first ranging/sidelink positioning service request are received when the measurement result calculation mode is a hybrid measurement result calculation mode based on at least one terminal device and the LMF, in which the at least one terminal device includes the first terminal device and/or the second terminal device; and in step 904, the measurement data and the first measurement result sent by the first terminal device for the first ranging/sidelink positioning service request are received when the requested information is requested information of the measurement data and the measurement result.

Further, in an embodiment of the present invention, the indication information includes at least one of: a measurement result calculation mode of the ranging/sidelink positioning; or requested information for the ranging/sidelink positioning for the first terminal device and a second terminal device.

Further, in an embodiment of the present invention, when the indication information includes the measurement result calculation mode of the ranging/sidelink positioning, and the measurement result calculation mode is the hybrid measurement result calculation mode based on at least one terminal device and the LMF, the LMF receives the measurement data and the first measurement result sent by the first terminal device for the first ranging/sidelink positioning service request.

Further, in an embodiment of the present invention, when the indication information includes the requested information for the ranging/sidelink positioning for the first terminal device and the second terminal device, and the requested information is requested information of the measurement data and the measurement result, the LMF receives the measurement data and the first measurement result sent by the first terminal device for the first ranging/sidelink positioning service request.

In conclusion, in the embodiments of the present invention, the LMF receives the second ranging/sidelink positioning service request sent by the AMF; sends the first ranging/sidelink positioning service request to the first terminal device in response to the second ranging/sidelink positioning service request, in which the first ranging/sidelink positioning service request carries indication information; and receives the measurement data and/or the measurement result of the ranging/sidelink positioning sent by the first terminal device for the first ranging/sidelink positioning service request. In the embodiments of the present invention, the first terminal device can determine the information to be sent to the LMF via the indication information sent to the first terminal device from the LMF, avoiding the situation where the information provided by the first terminal device in the ranging/sidelink positioning is ambiguous, and thus the calculation of the ranging/sidelink positioning is unable to be performed or is inaccurate. The present invention specifically discloses the specific situation where the LMF receives the measurement data and the first measurement result sent by the first terminal device. The present invention provides a processing method for the situation of "ranging/sidelink positioning" to provide the information required for the ranging/sidelink positioning and the node for the ranging/sidelink positioning to achieve the ranging/sidelink positioning calculation result or improve the accuracy of the ranging/sidelink positioning.

FIG. 10 is a flowchart of a ranging/sidelink positioning method provided by an embodiment of the present invention. The method is performed by the LMF. As shown in FIG. 10, the method includes the following steps.

In step 1001, a second ranging/sidelink positioning service request sent by an AMF is received.

In step 1002, a first ranging/sidelink positioning service request is sent to a first terminal device in response to the second ranging/sidelink positioning service request. The first ranging/sidelink positioning service request carries indication information, and the indication information includes a measurement result calculation mode of the ranging/sidelink positioning.

One of step 1003 and step 1004 is performed. In step 1003, the measurement data and the first measurement result sent by the first terminal device for the first ranging/sidelink positioning service request are received when the measurement result calculation mode is the hybrid measurement result calculation mode based on at least one terminal device and the LMF; and in step 1004, the measurement data and the first measurement result sent by the first terminal device for the first ranging/sidelink positioning service request are received when the requested information is requested information of the measurement data and the measurement result.

In step 1005, a second measurement result is determined according to the measurement data and the first measurement result.

Other details about steps 1001 to 1004 may be referred to the description of the above embodiments, which are not described again in the embodiments of the present invention.

For example, in an embodiment of the present invention, when the LMF receives the measurement data and the first measurement result sent by the first terminal device for the first ranging/sidelink positioning service request, the LMF can determine the second measurement result according to the measurement data and the first measurement result.

Further, in an embodiment of the present invention, the second measurement result refers to a measurement result obtained from the result calculation of the ranging/sidelink positioning performed on the measurement data and the first measurement result by the first terminal device in a case where the measurement result calculation mode is the hybrid measurement result calculation mode based on the first terminal device and the LMF, or the requested information is the requested information of the measurement data and the measurement result. Wording "second" of the second measurement result is only used to refer to a measurement result obtained by the LMF according to the measurement data and the first measurement result, and the second measurement result does not specifically refer to a fixed measurement result. For example, when the measurement data or the first measurement result changes, the second measurement result may change accordingly.

Further, in an embodiment of the present invention, the LMF may send the second measurement result to the AMF.

In conclusion, in the embodiments of the present invention, the LMF receives the second ranging/sidelink positioning service request sent by the AMF; sends the first ranging/sidelink positioning service request to the first terminal device in response to the second ranging/sidelink positioning service request, in which the first ranging/sidelink positioning service request carries indication information; and receives the measurement data and/or the measurement result of the ranging/sidelink positioning sent by the first terminal device for the first ranging/sidelink positioning service request. In the embodiments of the present invention, the first terminal device can determine the information to be sent to the LMF via the indication information sent to the first terminal device from the LMF, avoiding the situation where the information provided by the first terminal device in the ranging/sidelink positioning is ambiguous, and thus the calculation of the ranging/sidelink positioning is unable to be performed or is inaccurate. The present invention specifically discloses the specific situation where the LMF receives the measurement data and the first measurement result sent by the first terminal device, and determines the second measurement result according to the measurement data and the first measurement result. The present invention provides a processing method for the situation of "ranging/sidelink positioning" to provide the information required for the ranging/sidelink positioning and the node for the ranging/sidelink positioning to achieve the ranging/sidelink positioning calculation result or improve the accuracy of the ranging/sidelink positioning.

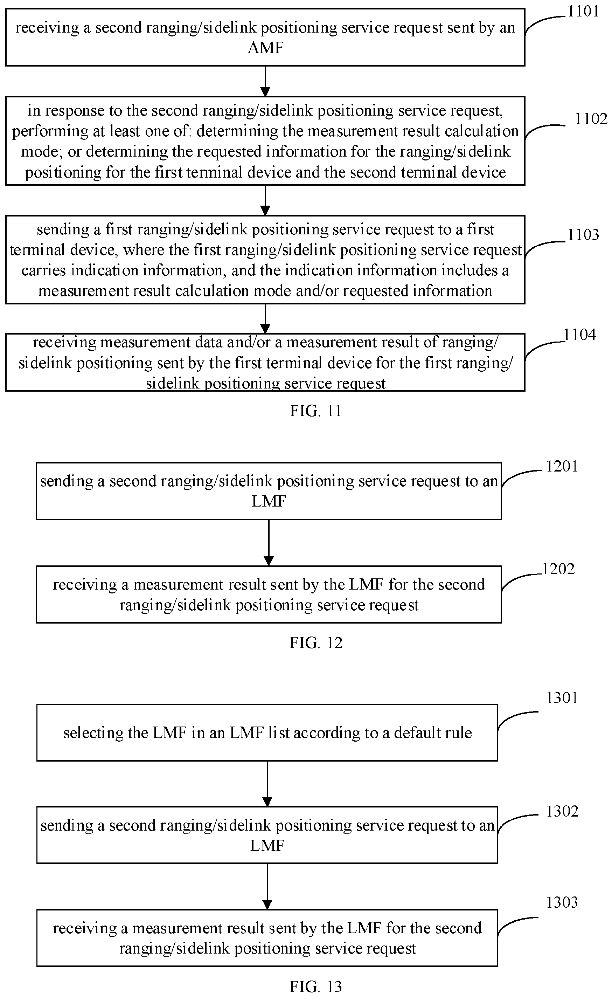

FIG. 11 is a flowchart of a ranging/sidelink positioning method provided by an embodiment of the present invention. The method is performed by the LMF. As shown in FIG. 11, the method includes the following steps.

In step 1101, a second ranging/sidelink positioning service request sent by an AMF is received.

In step 1102, in response to the second ranging/sidelink positioning service request, performing at least one of: determining the measurement result calculation mode; or determining the requested information for the ranging/sidelink positioning for the first terminal device and the second terminal device.

In step 1103, a first ranging/sidelink positioning service request is sent to a first terminal device. The first ranging/sidelink positioning service request carries indication information, and the indication information includes a measurement result calculation mode and/or requested information.

In step 1104, measurement data and/or a measurement result of ranging/sidelink positioning sent by the first terminal device for the first ranging/sidelink positioning service request is received.

In an embodiment of the present invention, in a case where the LMF determines the measurement result calculation mode, a measurement result calculation mode based on the first terminal device is determined as the measurement result calculation mode if only the first terminal device supports measurement result calculation; a measurement result calculation mode based on the LMF is determined as the measurement result calculation mode if only the LMF supports measurement result calculation; the measurement result calculation mode is determined according to a mode selection policy if both the at least one terminal device and the LMF support measurement result calculation.

Further, in an embodiment of the present invention, determining the measurement result calculation mode according to the mode selection policy includes at least one of: determining the measurement result calculation mode according to preference computing node information of the ranging/sidelink positioning; or determining the measurement result calculation mode according to operator policy information.

Further, in an embodiment of the present invention, determining the measurement result calculation mode according to the preference computing node information of the ranging/sidelink positioning includes at least one of: determining the measurement result calculation mode according to the preference computing node information of the ranging/sidelink positioning sent by the AMF; or determining the measurement result calculation mode according to the preference computing node information of the ranging/sidelink positioning sent by the terminal device.

Further, in an embodiment of the present invention, determining the requested information for the ranging/sidelink positioning for the first terminal device and the second terminal device includes: determining the requested information for the ranging/sidelink positioning for the first terminal device and the second terminal device according to the measurement result calculation mode determined.

Further, in an embodiment of the present invention, the preferred computing node information for ranging/sidelink positioning sent by the first terminal device may be the first terminal device based on the positioning capability information of the first terminal device and the positioning capability of the LMF. The information is certain.

In conclusion, in the embodiments of the present invention, the LMF receives the second ranging/sidelink positioning service request sent by the AMF; sends the first ranging/sidelink positioning service request to the first terminal device in response to the second ranging/sidelink positioning service request, in which the first ranging/sidelink positioning service request carries indication information; and receives the measurement data and/or the measurement result of the ranging/sidelink positioning sent by the first terminal device for the first ranging/sidelink positioning service request. In the embodiments of the present invention, the first terminal device can determine the information to be sent to the LMF via the indication information sent to the first terminal device from the LMF, avoiding the situation where the information provided by the first terminal device in the ranging/sidelink positioning is ambiguous, and thus the calculation of the ranging/sidelink positioning is unable to be performed or is inaccurate. The present invention specifically discloses the specific situation where the LMF determines the measurement result calculation mode. The present invention provides a processing method for the situation of "ranging/sidelink positioning" to provide the information required for the ranging/sidelink positioning and the node for the ranging/sidelink positioning to achieve the ranging/sidelink positioning calculation result or improve the accuracy of the ranging/sidelink positioning.

FIG. 12 is a flowchart of a ranging/sidelink positioning method provided by an embodiment of the present invention. The method is performed by an AMF. As shown in FIG. 12, the method includes the following steps.

In step 1201, a second ranging/sidelink positioning service request is sent to an LMF.

In step 1202, a measurement result sent by the LMF for the second ranging/sidelink positioning service request is received.

Further, in an embodiment of the present invention, before sending the second ranging/sidelink positioning service request to the LMF, the method further includes: selecting the LMF in an LMF list according to a default rule.

In conclusion, in the embodiments of the present invention, the AMF sends the second ranging/sidelink positioning service request to the LMF; and receives the measurement result sent by the LMF for the second ranging/sidelink positioning service request. In the embodiments of the present invention, by sending the second ranging/sidelink positioning service request to the LMF, the situation where the information provided by the first terminal device in the ranging/sidelink positioning is ambiguous, and thus the calculation of the ranging/sidelink positioning is unable to be performed or is inaccurate is avoided. The present invention provides a processing method for the situation of "ranging/sidelink positioning" to provide the information required for the ranging/sidelink positioning and the node for the ranging/sidelink positioning to achieve the ranging/sidelink positioning calculation result or improve the accuracy of the ranging/sidelink positioning.

FIG. 13 is a flowchart of a ranging/sidelink positioning method provided by an embodiment of the present invention. The method is performed by the AMF. As shown in FIG. 13, the method includes the following steps.

In step 1301, an LMF is selected in an LMF list according to a default rule.

In step 1302, a second ranging/sidelink positioning service request is sent to the LMF.

In step 1303, a measurement result sent by the LMF for the second ranging/sidelink positioning service request is received.

In conclusion, in the embodiments of the present invention, the AMF sends the second ranging/sidelink positioning service request to the LMF; and receives the measurement result sent by the LMF for the second ranging/sidelink positioning service request. In the embodiments of the present invention, by sending the second ranging/sidelink positioning service request to the LMF, the situation where the information provided by the first terminal device in the ranging/sidelink positioning is ambiguous, and thus the calculation of the ranging/sidelink positioning is unable to be performed or is inaccurate is avoided. The present invention specifically discloses the specific situation of determining the LMF. The present invention provides a processing method for the situation of "ranging/sidelink positioning" to provide the information required for the ranging/sidelink positioning and the node for the ranging/sidelink positioning to achieve the ranging/sidelink positioning calculation result or improve the accuracy of the ranging/sidelink positioning.

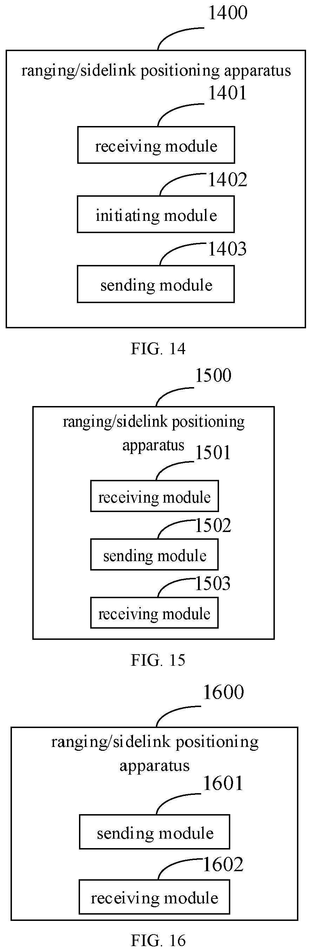

FIG. 14 is a schematic diagram of a ranging/sidelink positioning apparatus provided by an embodiment of the present invention. As shown in FIG. 14, the apparatus 1400 includes: a receiving module 1401 configured to receive a first ranging/sidelink positioning service request sent by a location management function (LMF), where the first ranging/sidelink positioning service request carries indication information; an initiating module 1402 configured to initiate ranging/sidelink positioning between the first terminal device and a second terminal device in response to the first ranging/sidelink positioning service request; and a sending module 1403 configured to send measurement data and/or a measurement result of the ranging/sidelink positioning to the LMF according to the indication information.

In conclusion, in the ranging/sidelink positioning apparatus of the embodiments of the present invention, the first terminal device receives the first ranging/sidelink positioning service request sent by the LMF, where the first ranging/sidelink positioning service request carries the indication information; initiates the ranging/sidelink positioning between the first terminal device and the second terminal device; and sends the measurement data and/or the measurement result of the ranging/sidelink positioning to the LMF according to the indication information. In the embodiments of the present invention, the first terminal device can determine the information to be sent to the LMF via the indication information, avoiding the situation where the information provided by the first terminal device in the ranging/sidelink positioning is ambiguous, and thus the calculation of the ranging/sidelink positioning is unable to be performed or is inaccurate. The present invention provides a processing method for "ranging/sidelink positioning" to provide the information required for the ranging/sidelink positioning and the node for the ranging/sidelink positioning to achieve the ranging/sidelink positioning calculation result or improve the accuracy of the ranging/sidelink positioning.

Further, in an embodiment of the present invention, the indication information includes at least one of: a measurement result calculation mode of the ranging/sidelink positioning; or requested information for the ranging/sidelink positioning for the first terminal device and the second terminal device.

Further, in an embodiment of the present invention, the measurement result calculation mode of the ranging/sidelink positioning includes at least one of: a measurement result calculation mode based on the LMF; a measurement result calculation mode based on the first terminal device and/or the second terminal device; or a hybrid measurement result calculation mode based on at least one terminal device and the LMF, where the at least one terminal device includes the first terminal device and/or the second terminal device.

Further, in an embodiment of the present invention, the requested information for the ranging/sidelink positioning for the first terminal device and the second terminal device includes at least one of: requested information of the measurement data; requested information of the measurement result; or requested information of the measurement data and the measurement result.

For example, in an embodiment of the present invention, the sending module 1403 is further configured to send only the measurement data to the LMF when the measurement result calculation mode is a measurement result calculation mode based on the LMF; send only the measurement data to the LMF when the requested information is requested information of the measurement data.

Further, in an embodiment of the present invention, the sending module 1403 is further configured to send only the measurement result to the LMF when the measurement result calculation mode is a measurement result calculation mode based on the first terminal device; send only the measurement result to the LMF when the requested information is requested information of the measurement result.

Further, in an embodiment of the present invention, sending the measurement result to the LMF includes: obtaining the measurement data; obtaining the measurement result by performing result calculation of the ranging/sidelink positioning on the measurement data; and sending the measurement result to the LMF.

Further, in an embodiment of the present invention, the sending module 1403 is further configured to send the measurement data and the measurement result to the LMF when the measurement result calculation mode is a hybrid measurement result calculation mode based on at least one terminal device and the LMF, in which the at least one terminal device includes the first terminal device and/or the second terminal device; send the measurement data and the measurement result to the LMF when the requested information is requested information of the measurement data and the measurement result.

For example, in an embodiment of the present invention, when sending the measurement data and the measurement result to the LMF, the sending module 1403 is specifically configured to obtain the measurement data; obtain a first measurement result by performing result calculation of the ranging/sidelink positioning on the measurement data; and send the measurement data and the first measurement result to the LMF.

Further, in an embodiment of the present invention, the sending module 1403 is further configured to send preference computing node information of the ranging/sidelink positioning to the LMF.

FIG. 15 is a schematic diagram of a ranging/sidelink positioning apparatus provided by an embodiment of the present invention. As shown in FIG. 15, the apparatus 1500 includes: a receiving module 1501 configured to receive a second ranging/sidelink positioning service request sent by an access and mobility management function (AMF); a sending module 1502 configured to send a first ranging/sidelink positioning service request to a first terminal device in response to the second ranging/sidelink positioning service request, where the first ranging/sidelink positioning service request carries indication information; and a receiving module 1503 configured to measurement data and/or a measurement result of ranging/sidelink positioning sent by the first terminal device for the first ranging/sidelink positioning service request.

In conclusion, in the ranging/sidelink positioning apparatus of the embodiments of the present invention, the LMF receives the second ranging/sidelink positioning service request sent by the AMF; sends the first ranging/sidelink positioning service request to the first terminal device in response to the second ranging/sidelink positioning service request, in which the first ranging/sidelink positioning service request carries indication information; and receives the measurement data and/or the measurement result of the ranging/sidelink positioning sent by the first terminal device for the first ranging/sidelink positioning service request. In the embodiments of the present invention, the first terminal device can determine the information to be sent to the LMF via the indication information sent to the first terminal device from the LMF, avoiding the situation where the information provided by the first terminal device in the ranging/sidelink positioning is ambiguous, and thus the calculation of the ranging/sidelink positioning is unable to be performed or is inaccurate. The present invention provides a processing method for the situation of "ranging/sidelink positioning" to provide the information required for the ranging/sidelink positioning and the node for the ranging/sidelink positioning to achieve the ranging/sidelink positioning calculation result or improve the accuracy of the ranging/sidelink positioning.

Optionally, in an embodiment of the present invention, the indication information includes at least one of: a measurement result calculation mode of the ranging/sidelink positioning; or requested information for the ranging/sidelink positioning for the first terminal device and the second terminal device.

For example, in an embodiment of the present invention, only the measurement data sent by the first terminal device for the first ranging/sidelink positioning service request is received when the measurement result calculation mode is a measurement result calculation mode based on the LMF; only the measurement data sent by the first terminal device for the first ranging/sidelink positioning service request is received when the requested information is requested information of the measurement data.

For example, in an embodiment of the present invention, the receiving module 1503 is further configured to obtain the measurement result by performing result calculation of the ranging/sidelink positioning on the measurement data after the measurement data and/or the measurement result sent by the first terminal device for the first ranging/sidelink positioning service request is received.

For example, in an embodiment of the present invention, the receiving module 1503 is further configured to receive only the measurement result sent by the first terminal device for the first ranging/sidelink positioning service request when the measurement result calculation mode is a measurement result calculation mode based on at least one terminal device, where the at least one terminal device includes the first terminal device and/or the second terminal device; receive only the measurement result sent by the first terminal device for the first ranging/sidelink positioning service request when the requested information is requested information of the measurement result.

For example, in an embodiment of the present invention, the receiving module 1503 is further configured to receive the measurement data and a first measurement result sent by the first terminal device for the first ranging/sidelink positioning service request when the measurement result calculation mode is a hybrid measurement result calculation mode based on at least one terminal device and the LMF, where the at least one terminal device includes the first terminal device and/or the second terminal device; receive the measurement data and the first measurement result sent by the first terminal device for the first ranging/sidelink positioning service request when the requested information is requested information of the measurement data and the measurement result.

For example, in an embodiment of the present invention, the receiving module 1503 is further configured to determine a second measurement result according to the measurement data and the first measurement result after the measurement data and the first measurement result sent by the first terminal device for the first ranging/sidelink positioning service request are received.

For example, in an embodiment of the present invention, the sending module 1502 is further configured to send the measurement result to the AMF.

For example, in an embodiment of the present invention, the sending module 1502 is further configured to perform at least one of: determining the measurement result calculation mode; or determining the requested information for the ranging/sidelink positioning for the first terminal device and the second terminal device.

For example, in an embodiment of the present invention, when determining the measurement result calculation mode, the sending module 1502 is further configured to determine a measurement result calculation mode based on the first terminal device and/or the second terminal device as the measurement result calculation mode if only the first terminal device and/or the second terminal device supports measurement result calculation; determine a measurement result calculation mode based on the LMF as the measurement result calculation mode if only the LMF supports measurement result calculation; determine the measurement result calculation mode according to a mode selection policy if both the at least one terminal device and the LMF support measurement result calculation, where the at least one terminal device includes the first terminal device and/or the second terminal device.

For example, in an embodiment of the present invention, the sending module 1502 is configured to determine the measurement result calculation mode according to the mode selection policy, which includes at least one of: determining the measurement result calculation mode according to preference computing node information of the ranging/sidelink positioning; or determining the measurement result calculation mode according to operator policy information.

For example, in an embodiment of the present invention, the sending module 1502 is configured to determine the measurement result calculation mode according to the preference computing node information of the ranging/sidelink positioning, which includes at least one of: determining the measurement result calculation mode according to the preference computing node information of the ranging/sidelink positioning sent by the AMF; or determining the measurement result calculation mode according to the preference computing node information of the ranging/sidelink positioning sent by the terminal device.

For example, in an embodiment of the present invention, the sending module 1502 is configured to determine the requested information for the ranging/sidelink positioning for the first terminal device and the second terminal device, which includes: determining the requested information for the ranging/sidelink positioning for the first terminal device and the second terminal device according to the measurement result calculation mode determined.

FIG. 16 is a schematic diagram of a ranging/sidelink positioning apparatus provided by an embodiment of the present invention. As shown in FIG. 16, the apparatus 1600 includes: a sending module 1601 configured to a second ranging/sidelink positioning service request to a location management function (LMF); and a receiving module 1602 configured to receive a measurement result sent by the LMF for the second ranging/sidelink positioning service request.

For example, in an embodiment of the present invention, the sending module 1601 is further configured to select the LMF in an LMF list according to a default rule before sending the second ranging/sidelink positioning service request to the LMF.

In conclusion, in the ranging/sidelink positioning apparatus of the embodiments of the present invention, the ranging/sidelink positioning apparatus sends the second ranging/sidelink positioning service request to the LMF; and receives the measurement result sent by the LMF for the second ranging/sidelink positioning service request. In the embodiments of the present invention, by sending the second ranging/sidelink positioning service request to the LMF, the situation where the information provided by the first terminal device in the ranging/sidelink positioning is ambiguous, and thus the calculation of the ranging/sidelink positioning is unable to be performed or is inaccurate is avoided. The present invention provides a processing method for the situation of "ranging/sidelink positioning" to provide the information required for the ranging/sidelink positioning and the node for the ranging/sidelink positioning to achieve the ranging/sidelink positioning calculation result or improve the accuracy of the ranging/sidelink positioning.

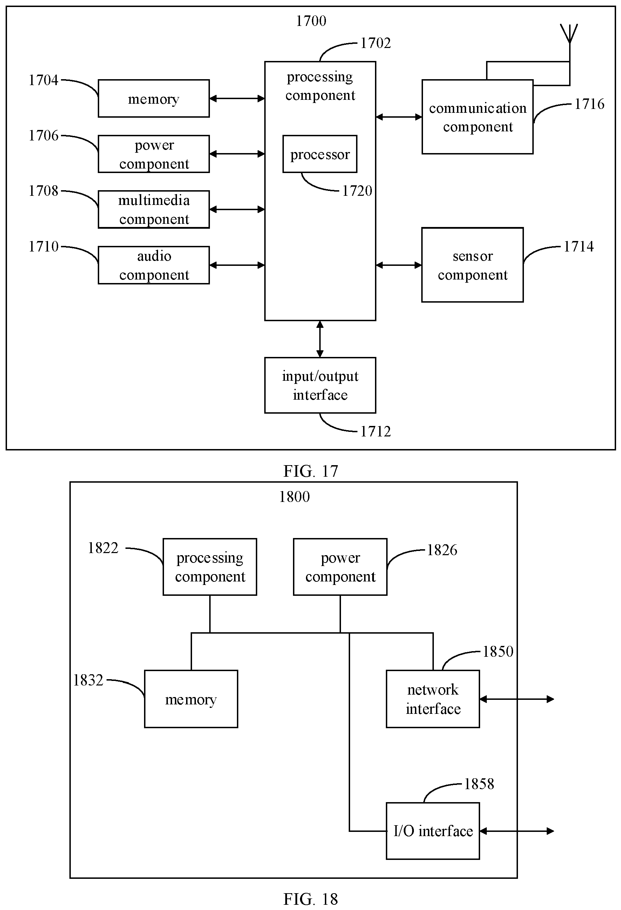

FIG. 17 is a block diagram of a UE 1700 provided by an embodiment of the present invention. For example, the UE 1700 may be a mobile phone, a computer, a digital broadcast terminal device, a messaging device, a game console, a tablet device, a medical device, a fitness device, a personal digital assistant, or the like.

Referring to FIG. 17, the UE 1700 may include at least one of the following components: a processing component 1702, a memory 1704, a power component 1706, a multimedia component 1708, an audio component 1710, an input/output (I/O) interface 1712, a sensor component 1714, and a communication component 1716.

The processing component 1702 typically controls overall operations of the UE 1700, such as the operations associated with display, phone calls, data communications, camera operations, and recording operations. The processing component 1702 may include at least one processors 1320 to execute instructions to perform all or some of the steps in the above-described methods. Moreover, the processing component 1702 may include at least one module which facilitates the interaction between the processing component 1702 and other components. For instance, the processing component 1702 may include a multimedia module to facilitate the interaction between the multimedia component 1708 and the processing component 1702.

The memory 1704 is configured to store various types of data to support the operation of the UE 1700. Examples of such data include instructions for any applications or methods operated on the UE 1700, contact data, phonebook data, messages, pictures, videos, etc. The memory 1704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1706 provides power to various components of the UE 1700. The power component 1706 may include a power management system, at least one power sources, and any other components associated with the generation, management, and distribution of power in the UE 1700.

The multimedia component 1708 includes a screen providing an output interface between the UE 1700 and the user. In some embodiments, the screen may include a liquid crystal display (LCD) and a touch panel (TP). If the screen includes the touch panel, the screen may be implemented as a touch screen to receive input signals from the user. The touch panel includes at least one touch sensors to sense touches, swipes, and gestures on the touch panel. The touch sensors may not only sense a boundary of a touch or swipe action, but also sense a wake-up time and a pressure associated with the touch or swipe action. In some embodiments, the multimedia component 1708 includes a front camera and/or a rear camera. The front camera and/or the rear camera may receive external multimedia data while the UE 1700 is in an operation mode, such as a photographing mode or a video mode. Each of the front camera and the rear camera may be a fixed optical lens system or have focus and optical zoom capability.

The audio component 1710 is configured to output and/or input audio signals. For example, the audio component 1710 includes a microphone (MIC) configured to receive an external audio signal when the UE 1700 is in an operation mode, such as a call mode, a recording mode, and a voice recognition mode. The received audio signal may be further stored in the memory 1704 or transmitted via the communication component 1716. In some embodiments, the audio component 1710 further includes a speaker to output audio signals.

The I/O interface 1712 provides an interface between the processing component 1702 and peripheral interface modules, such as keyboards, click wheels, buttons, and the like. The buttons may include, but are not limited to, a home button, a volume button, a starting button, and a locking button.

The sensor component 1714 includes at least one sensor to provide status assessments of various aspects of the UE 1700. For instance, the sensor component 1714 may detect an open/closed status of the equipment 1700, relative positioning of components, e.g., the display and the keypad, of the UE 1700. The sensor component 1714 may also detect a change in position of the UE 1700 or a component of the UE 1700, a presence or absence of user contact with the UE 1700, an orientation or an acceleration/deceleration of the UE 1700, and a change in temperature of the UE 1700. The sensor component 1714 may include a proximity sensor configured to detect the presence of nearby objects without any physical contact. The sensor component 1714 may further include a light sensor, such as a CMOS or CCD image sensor, for use in imaging applications. In some embodiments, the sensor component 1714 may further include an accelerometer sensor, a gyroscope sensor, a magnetic sensor, a pressure sensor, or a temperature sensor.

The communication component 1716 is configured to facilitate wired or wireless communication between the UE 1700 and other devices. The UE 1700 can access a wireless network based on a communication standard, such as Wi-Fi, 2G, or 3G, or a combination thereof. In an illustrative embodiment, the communication component 1716 receives a broadcast signal or broadcast associated information from an external broadcast management system via a broadcast channel. In an illustrative embodiment, the communication component 1716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the UE 1700 may be implemented with at least one of application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above methods.

FIG. 18 is a block diagram of a network device 1800 provided by an embodiment of the present invention. For example, the network device 1800 may be provided as a network device. Referring to FIG. 18, the network device 1800 includes a processing component 1822, which further includes at least one of processors, and a memory resource represented by a memory 1832 configured to store instructions executable by the processing component 1822, such as application programs. The application programs stored in the memory 1832 may include one or more modules each corresponding to a set of instructions. In addition, a processing component 1822 is configured to execute instructions to perform any of the foregoing methods performed by the network device, for example, the method as shown in FIG. 1.

The network device 1800 may also include a power component 1826 configured to perform the power management of the network device 1800, a wired or wireless network interfaces 1850 configured to connect the network device 1800 to a network, and an input/output (I/O) interface 1858. The network device 1800 may operate based on an operating system stored in the memory 1832, such as Windows Server TM, Mac OS XTM, Unix TM, Linux TM, Free BSDTM, or the like.

In the above embodiments provided by the present invention, the methods provided in embodiments of the present invention are introduced from perspectives of the network device and the UE respectively. In order to implement the various functions in the methods provided by the above embodiments of the present invention, the network device and the UE may include a hardware structure and a software module, and implement the above functions in a form of the hardware structure, the software module, or the hardware structure plus the software module. One function among the above mentioned functions may be implemented in the form of the hardware structure, the software module, or the hardware structure plus the software module.

In the above embodiments provided by the present invention, the methods provided in embodiments of the present invention are introduced from perspectives of the network device and the UE respectively. In order to implement the various functions in the methods provided by the above embodiments of the present invention, the network device and the UE may include a hardware structure and a software module, and implement the above functions in a form of the hardware structure, the software module, or the hardware structure plus the software module. One function among the above mentioned functions may be implemented in the form of the hardware structure, the software module, or the hardware structure plus the software module.

Embodiments of the present invention provide a communication apparatus, which may include a transceiving module and a processing module. The transceiving module may include a sending module and/or a receiving module, the sending module is configured to implement a sending function, and the receiving module is configured to implement a receiving function. The transceiving module may implement the sending function and/or the receiving function.

The communication apparatus may be a terminal device (such as the terminal device in the foregoing method embodiments), may also be an apparatus in the terminal device, and may also be an apparatus that can be used in conjunction with the terminal device. Alternatively, the communication apparatus may be a network device, may also be an apparatus in the network device, and may also be an apparatus that can be used in conjunction with the network device.

Embodiments of the present invention provide a communication device, which may be a network device, or may be a terminal device (such as the terminal device in the foregoing method embodiments), or may be a chip, a chip system, or a processor that supports the network device to implement the above methods, or may be a chip, a chip system, or a processor that supports the terminal device to implement the above methods. The device may be configured to implement the methods as described in the above method embodiments, and for details, reference may be made to the descriptions in the above method embodiments.

The communications device may include one or more processors. The processor may be a general-purpose processor or a special-purpose processor. For example, it may be a baseband processor or a central processing unit. The baseband processor may be configured to process a communication protocol and communication data, and the central processing unit may be configured to control a communication device (such as a network device, a baseband chip, a terminal device, a terminal device chip, a DU or a CU, etc.), execute computer programs, and process data of the computer programs.

Optionally, the communication device may further include one or more memories having stored therein a computer program. The processor executes the computer program, to cause the communication device to implement the methods as described in the above method embodiments. Optionally, the memory may have stored therein data. The communication device and the memory may be provided separately or integrated together.

Optionally, the communication device may further include a transceiver and an antenna. The transceiver may be called a transceiving element, a transceiving machine, a transceiving circuit or the like, for implementing a transceiving function. The transceiver may include a receiver and a transmitter. The receiver may be called a receiving machine, a receiving circuit or the like, for implementing a receiving function. The transmitter may be called a sending machine, a sending circuit or the like, for implementing a sending function.

Optionally, the communication device may further include one or more interface circuits. The interface circuit is configured to receive a code instruction and transmit the code instruction to the processor. The processor runs the code instruction to enable the communication device to execute the methods as described in the above method embodiments.

The communication device is a terminal device (such as the terminal device in the foregoing method embodiments). The processor is configured to execute the method shown in any one of FIGS. 1 to 4.

The communication device is the network device. The processor is configured to execute the method shown in any one of FIGS. 5 and 7.

The communication device is the LMF corresponding to the observer UE. The processor is configured to execute the method shown in FIG. 8.

In an implementation, the processor may include the transceiver configured to implement receiving and sending functions. For example, the transceiver may be a transceiving circuit, an interface, or an interface circuit. The transceiving circuit, the interface or the interface circuit configured to implement the receiving and sending functions may be separated or may be integrated together. The above transceiving circuit, interface or interface circuit may be configured to read or write codes/data, or the above transceiving circuit, interface or interface circuit may be configured to transmit or transfer signals.

In an implementation, the processor may have stored therein a computer program that, when run on the processor, causes the communication device to implement the methods as described in the above method embodiments. The computer program may be embedded in the processor, and in this case, the processor may be implemented by a hardware.

In an implementation, the communication device may include a circuit, and the circuit may implement the sending, receiving or communicating function in the foregoing method embodiments. The processor and the transceiver described in the present invention may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be manufactured using various IC process technologies, such as a complementary metal oxide semiconductor (CMOS), an N-type metal-oxide-semiconductor (NMOS), a P-type metal oxide semiconductor (PMOS), a bipolar junction transistor (BJT), a bipolar CMOS (BiCMOS), silicon germanium (SiGe), gallium arsenide (GaAs), etc.

The communication device described in the above embodiments may be the network device or the terminal device (such as the terminal device in the foregoing method embodiments), but the scope of the communication device described in the present invention is not limited thereto, and the structure of the communication device may not be limited thereto. The communication device may be a stand-alone device or may be a part of a larger device. For example, the communication device may be: (1) a stand-alone integrated circuit (IC), or a chip, or a chip system or subsystem; (2) a set of one or more ICs, optionally, the set of ICs may also include a storage component for storing data and computer programs; (3) an ASIC, such as a modem; (4) a module that may be embedded in other devices; (5) a receiver, a terminal device, an intelligent terminal device, a cellular phone, a wireless device, a handheld machine, a mobile unit, a vehicle device, a network device, a cloud device, an artificial intelligence device, etc.; (6) others.

For the case where the communication device may be a chip or a chip system, the chip includes a processor and an interface. In the chip, one or more processors may be provided, and more than one interface may be provided.

Optionally, the chip further includes a memory for storing necessary computer programs and data.

Those skilled in the art may also understand that various illustrative logical blocks and steps listed in embodiments of the present invention may be implemented by an electronic hardware, a computer software, or a combination thereof. Whether such functions are implemented by a hardware or a software depends on specific applications and design requirements of an overall system. For each specific application, those skilled in the art may use various methods to implement the described functions, but such an implementation should not be understood as extending beyond the protection scope of embodiments of the present invention.

The present invention further provides a readable storage medium having stored thereon instructions that, when executed by a computer, cause functions of any of the above method embodiments to be implemented.

The present invention further provides a computer program product that, when executed by a computer, causes functions of any of the above method embodiments to be implemented.

The above embodiments may be implemented in whole or in part by a software, a hardware, a firmware or any combination thereof. When implemented using the software, the above embodiments may be implemented in whole or in part in a form of the computer program product. The computer program product includes one or more computer programs. When the computer program is loaded and executed on the computer, all or some of the processes or functions according to embodiments of the present invention will be generated. The computer may be a general purpose computer, a special purpose computer, a computer network, or other programmable devices. The computer program may be stored in a computer-readable storage medium or transmitted from one computer-readable storage medium to another computer-readable storage medium. For example, the computer program may be transmitted from one website, computer, server or data center to another website, computer, server or data center in a wired manner (such as via a coaxial cable, an optical fiber, a digital subscriber line (DSL)) or a wireless manner (such as infrared, wireless, or via microwave, etc.). The computer-readable storage medium may be any available medium that can be accessed by the computer, or a data storage device such as the server or the data center integrated with one or more available media. The available medium may be a magnetic medium (for example, a floppy disk, a hard disk, or a magnetic tape), an optical medium (for example, a high-density digital video disc (DVD)), or a semiconductor medium (for example, a solid state disk (SSD)), etc.

Those of ordinary skill in the art can understand that the first, second, and other numeral numbers involved in the present invention are distinguished for convenience of description, and are not intended to limit the scope of embodiments of the present invention, and nor are they intended to represent sequential order.

The term "at least one" used in the present invention may also be described as one or more, and the term "a plurality of" may cover two, three, four or more, which are not limited in the present invention. In embodiments of the present invention, for a certain kind of technical feature, the technical features in this kind of technical feature are distinguished by term like "first", "second", "third", "A", "B", "C" and "D", etc., and these technical features described with the "first", "second", "third", "A", "B", "C" and "D" have no order of priority and have no order of size.

Other embodiments of the present invention will be apparent to those skilled in the art from consideration of the specification and practice of the present invention disclosed here. The present invention is intended to cover any variations, uses, or adaptations of the present invention following the general principles thereof and including such departures from the present invention as come within known or customary practice in the art. It is intended that the specification and examples be considered as illustrative, with a true scope and spirit of the present invention being indicated by the following claims.

It will be appreciated that the present invention is not limited to the exact construction that has been described above and illustrated in the accompanying drawings, and that various modifications and changes can be made without departing from the scope thereof. It is intended that the scope of the present invention be limited by the appended claims.

## Claims

1. A ranging/sidelink positioning method, performed by a first terminal device, comprising:
receiving a first ranging/sidelink positioning service request sent by a location management function (LMF), wherein the first ranging/sidelink positioning service request carries indication information;
initiating ranging/sidelink positioning between the first terminal device and a second terminal device in response to the first ranging/sidelink positioning service request; and
sending measurement data and/or a measurement result of the ranging/sidelink positioning to the LMF according to the indication information.

2. The method according to claim 1, wherein the indication information comprises at least one of:
a measurement result calculation mode of the ranging/sidelink positioning; or
requested information for the ranging/sidelink positioning for the first terminal device and the second terminal device.

3. The method according to claim 2, wherein the measurement result calculation mode of the ranging/sidelink positioning comprises at least one of:
a measurement result calculation mode based on the LMF;
a measurement result calculation mode based on the first terminal device and/or the second terminal device; or
a hybrid measurement result calculation mode based on at least one terminal device and the LMF, wherein the at least one terminal device comprises the first terminal device and/or the second terminal device.

4. The method according to claim 2, wherein the requested information for the ranging/sidelink positioning for the first terminal device and the second terminal device comprises at least one of:
requested information of the measurement data;
requested information of the measurement result; or
requested information of the measurement data and the measurement result.

5. The method according to claim 2, wherein
only the measurement data is sent to the LMF when the measurement result calculation mode is a measurement result calculation mode based on the LMF;
only the measurement data is sent to the LMF when the requested information is requested information of the measurement data.

6. The method according to claim 2, wherein
only the measurement result is sent to the LMF when the measurement result calculation mode is a measurement result calculation mode based on the first terminal device;
only the measurement result is sent to the LMF when the requested information is requested information of the measurement result.

7. The method according to claim 6, wherein sending the measurement result to the LMF comprises:
obtaining the measurement data;
obtaining the measurement result by performing result calculation of the ranging/sidelink positioning on the measurement data; and
sending the measurement result to the LMF.

8. The method according to claim 2, wherein
the measurement data and the measurement result are sent to the LMF when the measurement result calculation mode is a hybrid measurement result calculation mode based on at least one terminal device and the LMF, wherein the at least one terminal device comprises the first terminal device and/or the second terminal device;
the measurement data and the measurement result are sent to the LMF when the requested information is requested information of the measurement data and the measurement result.

9. The method according to claim 8, wherein sending the measurement data and the measurement result to the LMF comprises:
obtaining the measurement data;
obtaining a first measurement result by performing result calculation of the ranging/sidelink positioning on the measurement data; and
sending the measurement data and the first measurement result to the LMF.

10. The method according to claim 1, further comprising:
sending preference computing node information of the ranging/sidelink positioning to the LMF.

11. A ranging/sidelink positioning method, performed by a location management function (LMF), comprising:
receiving a second ranging/sidelink positioning service request sent by an access and mobility management function (AMF);
sending a first ranging/sidelink positioning service request to a first terminal device in response to the second ranging/sidelink positioning service request, wherein the first ranging/sidelink positioning service request carries indication information; and
receiving measurement data and/or a measurement result of ranging/sidelink positioning sent by the first terminal device for the first ranging/sidelink positioning service request.

12. The method according to claim 11, wherein the indication information comprises at least one of:
a measurement result calculation mode of the ranging/sidelink positioning; or
requested information for the ranging/sidelink positioning for the first terminal device and a second terminal device.

13. The method according to claim 12, wherein
only the measurement data sent by the first terminal device for the first ranging/sidelink positioning service request is received when the measurement result calculation mode is a measurement result calculation mode based on the LMF;
only the measurement data sent by the first terminal device for the first ranging/sidelink positioning service request is received when the requested information is requested information of the measurement data.

14. The method according to claim 13, wherein after the measurement data and/or the measurement result sent by the first terminal device for the first ranging/sidelink positioning service request is received, the method further comprises:
obtaining the measurement result by performing result calculation of the ranging/sidelink positioning on the measurement data.

15. The method according to claim 12, wherein
only the measurement result sent by the first terminal device for the first ranging/sidelink positioning service request is received when the measurement result calculation mode is a measurement result calculation mode based on at least one terminal device, wherein the at least one terminal device comprises the first terminal device and/or the second terminal device;
only the measurement result sent by the first terminal device for the first ranging/sidelink positioning service request is received when the requested information is requested information of the measurement result.

16. The method according to claim 12, wherein
the measurement data and a first measurement result sent by the first terminal device for the first ranging/sidelink positioning service request are received when the measurement result calculation mode is a hybrid measurement result calculation mode based on at least one terminal device and the LMF, wherein the at least one terminal device comprises the first terminal device and/or the second terminal device;
the measurement data and the first measurement result sent by the first terminal device for the first ranging/sidelink positioning service request are received when the requested information is requested information of the measurement data and the measurement result.

17. The method according to claim 16, wherein after the measurement data and the first measurement result sent by the first terminal device for the first ranging/sidelink positioning service request are received, the method further comprises:
determining a second measurement result according to the measurement data and the first measurement result.

18. The method according to any one of claims 14 to 17, further comprising:
sending the measurement result to the AMF.

19. The method according to claim 12, wherein the method further comprises at least one of:
determining the measurement result calculation mode; or
determining the requested information for the ranging/sidelink positioning for the first terminal device and the second terminal device.

20. The method according to claim 19, wherein determining the measurement result calculation mode comprises:
determining a measurement result calculation mode based on the first terminal device and/or the second terminal device as the measurement result calculation mode if only the first terminal device and/or the second terminal device supports measurement result calculation;
determining a measurement result calculation mode based on the LMF as the measurement result calculation mode if only the LMF supports measurement result calculation;
determining the measurement result calculation mode according to a mode selection policy if both the at least one terminal device and the LMF support measurement result calculation, wherein the at least one terminal device comprises the first terminal device and/or the second terminal device.

21. The method according to claim 20, wherein determining the measurement result calculation mode according to the mode selection policy comprises at least one of:
determining the measurement result calculation mode according to preference computing node information of the ranging/sidelink positioning; or
determining the measurement result calculation mode according to operator policy information.

22. The method according to claim 21, wherein determining the measurement result calculation mode according to the preference computing node information of the ranging/sidelink positioning comprises at least one of:
determining the measurement result calculation mode according to the preference computing node information of the ranging/sidelink positioning sent by the AMF; or
determining the measurement result calculation mode according to the preference computing node information of the ranging/sidelink positioning sent by the terminal device.

23. The method according to claim 19, wherein determining the requested information for the ranging/sidelink positioning for the first terminal device and the second terminal device comprises:
determining the requested information for the ranging/sidelink positioning for the first terminal device and the second terminal device according to the measurement result calculation mode determined.

24. A ranging/sidelink positioning method, performed by an access and mobility management function (AMF), comprising:
sending a second ranging/sidelink positioning service request to a location management function (LMF); and
receiving a measurement result sent by the LMF for the second ranging/sidelink positioning service request.

25. The method according to claim 24, wherein before sending the second ranging/sidelink positioning service request to the LMF, the method further comprises:
selecting the LMF in an LMF list according to a default rule.

26. A ranging/sidelink positioning apparatus, comprising:
a receiving module configured to receive a first ranging/sidelink positioning service request sent by a location management function (LMF), wherein the first ranging/sidelink positioning service request carries indication information;
an initiating module configured to initiate ranging/sidelink positioning between the first terminal device and a second terminal device in response to the first ranging/sidelink positioning service request; and
a sending module configured to send measurement data and/or a measurement result of the ranging/sidelink positioning to the LMF according to the indication information.

27. A ranging/sidelink positioning apparatus, comprising:
a receiving module configured to receive a second ranging/sidelink positioning service request sent by an access and mobility management function (AMF);
a sending module configured to send a first ranging/sidelink positioning service request to a first terminal device in response to the second ranging/sidelink positioning service request, wherein the first ranging/sidelink positioning service request carries indication information; and
a receiving module configured to measurement data and/or a measurement result of ranging/sidelink positioning sent by the first terminal device for the first ranging/sidelink positioning service request.

28. A ranging/sidelink positioning apparatus, comprising:
a sending module configured to a second ranging/sidelink positioning service request to a location management function (LMF); and
a receiving module configured to receive a measurement result sent by the LMF for the second ranging/sidelink positioning service request.

29. A terminal device, comprising:
a processor, and
a memory having stored therein a computer program that, when executed by the processor, causes the device to implement the method according to any one of claims 1 to 10.

30. A location management function (LMF), comprising:
a processor, and
a memory having stored therein a computer program that, when executed by the processor, causes the device to implement the method according to any one of claims 11 to 23.

31. An access and mobility management function (AMF), comprising:
a processor, and
a memory having stored therein a computer program that, when executed by the processor, causes the device to implement the method according to claim 24 or 25.

32. A communication device, comprising a processor and an interface circuit;
wherein the interface circuit is configured to receive a code instruction and transmit the code instruction to the processor; and
the processor is configured to run the code instruction to implement the method according to any one of claims 1 to 10.

33. A communication device, comprising a processor and an interface circuit;
wherein the interface circuit is configured to receive a code instruction and transmit the code instruction to the processor; and
the processor is configured to run the code instruction to implement the method according to any one of claims 11 to 23.

34. A communication device, comprising a processor and an interface circuit;
wherein the interface circuit is configured to receive a code instruction and transmit the code instruction to the processor; and
the processor is configured to run the code instruction to implement the method according to claim 24 or 25.

35. A computer-readable storage medium having stored therein instructions that, when executed, cause the method according to any one of claims 1 to 10 to be implemented.

36. A computer-readable storage medium having stored therein instructions that, when executed, cause the method according to any one of claims 11 to 23 to be implemented.

37. A computer-readable storage medium having stored therein instructions that, when executed, cause the method according to claim 24 or 25 to be implemented.
